# EUROPEAN PATENT SPECIFICATION

(11) **EP 0 611 166 B1**
(45) Date of publication and mention of the grant of the patent: **14.01.1998**
(21) Application number: 94301006.6
(22) Date of filing: 11.02.1994
(51) Int. Cl.: F16H 48/12

(54) **Differential drive mechanisms**
Differentialer Antriebsmechanismus
Mécanisme d'entraînement différentiel

(30) Priority: 12.02.1993 GB 9302870; 13.09.1993 US 120977
(43) Date of publication of application: 17.08.1994
(73) Proprietor: RICARDO CONSULTING ENGINEERS LIMITED, West Sussex BN4 5FG (GB); TRANSMISSION SYSTEMS LIMITED, St. Clement, Jersey JE2 6QA (GB)
(72) Inventor: Moore, John Westwood, Angmering, West Sussex BN16 4AF (GB); Carden, John Craven, PO Box 7776 Nassau (BS)
(74) Representative: Jennings, Nigel Robin

(56) References cited:
- DE-C- 819 628
- FR-A- 1 181 029
- US-A- 1 364 745
- US-A- 1 954 347
- US-A- 4 291 591

## Description

The present invention relates to differential drive mechanisms, particularly automotive differentials of limited slip type, and is concerned with that type of differential drive mechanism whcih comprises a cage, which is rotatable about an axis and represents the input, two coaxial output shafts which are received in respective holes in the cage and are rotatable with respect to the cage about the said axis and have inner ends within the cage, a coupling which is connected eccentrically to the two output shafts to transmit relative contra-rotational movement between them by connections which permit relative rotation of the coupling and the output shafts about an axis substantially parallel to the said axis and a restraint member which is coupled to the cage and to the coupling such that the coupling is rotatable with respect to the cage about an axis substantially perpendicular to the said axis and capable of reciprocating movement in a direction perpendicular to the said axis but prevented from movement in a direction parallel to the said axis, the eccentric connection of the coupling and the output shafts including a respective eccentric hole formed in the inner end of each output shaft in which the associated end of the coupling is received, the ends of the coupling having a part-spherical engagement surface, a sleeve which affords a complementary part-spherical internal surface being received in each eccentric hole and each engagement surface being in engagement with a respective complementary internal surface.

Conventional automotive differentials provide a cost effective means of sharing torque equally between the driven wheels. However, the characteristic of always providing equal torque restricts the total to the level which maintains traction at the wheels with minimum grip. If this is close to zero, e.g. due to the fact that one wheel is on very slippery ground, then the total will also be very low even if one wheel has very good grip.

To overcome this disadvantage, various types of limited slip differential have been used of either the speed control or torque control type. The speed control type senses wheel slip after it occurs by the speed difference and transfers torque to the slower wheel accordingly. The torque control type transfers torque from the faster moving wheel before traction is lost.

Various types of torque control automotive differential are known but substantially all of those which are actually used comprise a substantial number of meshing helical gears or alternatively face cams and cam followers with helical sliding surfaces. Such differentials are therefore relatively heavy and expensive and time-consuming to manufacture and are relatively complex. In addition, the areas of the friction surfaces at which friction torque is generated are relatively small which means that the loading per unit area is relatively high and thus that the service life is relatively short.

Numerous differentials of the specific type with which the present invention is concerned and of a generally similar type are also known from the patent literature, e.g. U.S. Patents Nos. 1098422, 1098423, 1364745, 1437510, 1954347, 4155274, 4291591, 2016849, 848931, 1278231, 1854910, 1499480, 1463356, 1663882 and 1843163. However, it is believed that no such differential has ever been manufactured as a commercial product. The reason for this is not known with certainty, but it is believed that, in addition to the fact that many of the differentials disclosed in the patents referred to above are of very complex construction and thus prohibitively expensive to manufacture, they all suffer from the following shortcoming: The entire driveline torque of an automotive engine is normally transmitted through the differential at all times, that is to say through those components whose primary purpose is to permit differential rotational speeds of the two output shafts. In this connection it will be appreciated that the loads to which the differential components are subjected when the vehicle is travelling in a straight line, for instance shock loads, particularly under heavy acceleration, are very considerably greater than the additional loads which are produced when the output shafts rotate at different speeds, particularly because the speed differential is rarely more than a few r.p.m. This means that the components in question must be of very robust and thus expensive construction and furthermore are subjected to very substantial loads, point or line loads in some cases, for extended periods of time and are thus subject to unacceptably premature failure through breakage or wear.

German Patent No. 819628 discloses a differential of the type referred to above which suffers from all the disadvantages referred to above. Thus all the driveline torque of the engine is transmitted through the differential components, i.e. the coupling, the restraint member and the female eccentrics in the output shafts, which means that these components must be of very robust construction but are nevertheless prone to unpredictable premature failure. Furthermore, the substantial loads exerted by the ends of the coupling on the walls of the eccentric holes fall outside the support of the bearing into the cage and result in substantial wear of both these components and in bending of the output shafts which in turn results in excessive wear and premature failure of their bearings.

French Patent No. 1 181 029 discloses a differential in accordance with the preamble of claim 1.

It is the object of the invention to provide a differential drive mechanism of the general type referred to above whose components are required to transmit only a proportion of the normal propulsive power of the vehicle engine or the like and are thus subjected to lower loads than usual and in which the high internal loads are simply supported on frictional surfaces, whereby they may be of lighter and cheaper construction than usual and the differential has a longer service life than known differentials.

According to the present invention a differential drive mechanism of the type referred to above is characterised in that the end of the coupling have a part-spherical engagement surface which engages a complementary internal surface within a sleeve which is received in the respective eccentric hole, and that the inner end of each output shaft is in sliding engagement with the inner surface of the cage whereby as the cage rotates about the said axis the sliding surface of the inner end of each output shaft is pressed by the coupling into contact with the opposed sliding surface on the cage so that a proportion of the torque transmitted to the cage is transmitted directly to the output shafts through the cooperating sliding surfaces.

Thus in the differential mechanism in accordance with the present invention the external surface of the inner end of each output shaft, which may constitute a half-shaft or a stub shaft connected, in use, to a constant velocity joint or even a very short and perhaps even hollow connecting shaft to which, in use, a further shaft is connected, constitutes a sliding surface which is spaced from the opposed surface of the cage, which also constitutes a sliding surface, such that contact between the output shaft and the cage supports the applied load from the coupling directly and does not cause any resultant tilting moment on the shaft, and so runs on the opposed portion of the internal surface of the cage, which also constitutes a sliding surface. As the cage is rotated by the engine via the restraint and coupling members and the eccentric connections with the output shafts, the force applied to the shafts displaces them laterally so that the sliding surfaces on the output shafts engage the opposing sliding surfaces on the cage on one side. In order that this occurs it is necessary that the nominal clearance between the sliding surfaces, that is to say between the inner ends of the output shafts and the cage, is less than that between the remainder of the output shafts and the cage. The coupling load is thus supported directly by the cage and a proportion of the torque applied to the cage is transmitted to the output shafts directly through the contacting areas of the sliding surfaces, and thus does not pass through the restraint and coupling members at all. In automotive applications the most severe drive torque occurs under conditions of shock load, particularly under harsh engagement of the drive to achieve rapid vehicle acceleration. In such conditions the shock load is shared between the frictional surfaces and the coupling. This is highly beneficial because it means that the percentage by which the load to which the components of the differential is subjected can typically be reduced by 40% or more. The proportion of the torque which passes through this alternative or bypass path will depend on the pressure with which the sliding surfaces engage one another which in turn depends on the magnitude of the torque which means that the proportion of the total torque or power which passes through the bypass path increases as the engine load or torque increases. This means that the torque bias ratio, i.e. the ratio of the torque applied to the two output shafts, is strongly load sensitive, that is to say increases with increasing load.

When the vehicle turns a corner, that is to say the differential is required to differentiate as well as acting simply as a power transmission unit, the point of contact of the cooperating pairs of sliding surfaces rotates with respect to those surfaces and this creates a frictional resistive torque. This frictional torque increases, but also, due to the conformal nature of the contacting surfaces, the coefficient of friction is low under low loads as lubricant is entrained between the surfaces and increases with load as the lubricant is expelled. Thus the torque bias ratio increases with torque.

The load sensitivity of the torque bias ratio results in highly desirable driving characteristics or "feel" of the vehicle to which the differential is fitted.

In order to control the frictional torque bias ratio when the output shafts rotate at different speeds, the frictional surfaces may be, for example, profiled or have additional lubricant feed paths or may be treated, for example tufftrided, phosphated or nitrided, to control their coefficient of friction and/or increase their abrasion resistance.

Clearly the above mechanisms for generation of frictional torque also occur at the interface of the coupling with the output shafts, but being at a smaller diameter, have a lesser effect on the torque bias ratio. In order to reduce the contact pressure and thus the wear of the engaging surfaces of the coupling and the eccentric holes, the ends of the coupling have a part-spherical engagement surface which engages a complementary internal surface within a sleeve which is received in the respective eccentric hole. The contact load is thus transmitted not through a substantially point or line contact area but through the relatively large area of the external surface of the sleeves. The use of such sleeves also provides protection from abrasive wear on the coupling and output shaft interface due to the alternative surfaces where differential rotational speed can be accommodated. Thus if one surface under rotation starts to generate a higher level of coefficient friction, for example due to the onset of abrasion of the surfaces, the other interface will slip preferentially, reducing the possibility of abrasive damage to the mating surfaces. The sleeves may be stationary in the eccentric holes, whereby the rotational movement between them and the output shafts occurs at the mating part-spherical surfaces and the output shafts reciprocate in a direction parallel to the said axis. Alternatively, the sleeves may be free to slide both axially and rotationally whereby the reciprocating and sliding occurs between the surfaces of the eccentric holes and the outer surfaces of the slippers. In a further alternative, the slippers are axially restrained but free to slide in rotation.

U.S. Patent No.1954347 discloses a differential of the type referred to which superficially appears to be of some relevance to the present invention in that the outer surfaces of the output shafts are in close proximity to the inner surface of the cage. However, they are said to be bearing fits within the cage or housing and this makes it clear that it is the intention to minimise contact and friction between the opposed surfaces and this is in stark contrast to the construction of the present invention which relies on frictional sliding contact between the cage and the output shafts to produce the split in the torque path through the differential. The distinction is further made clear by the fact that there is no split in the torque path in the prior patent.

Furthermore, the prior patent makes no provision for containment of the loads and wear regimes that will be experienced, in use, by the differential. As such, the construction of the prior patent suffers from a number of severe disadvantages which, it is believed, were responsible for it never being manufactured as a commercial product. Firstly, with respect to the generation of the load across the sliding interfaces between the coupling and the output shaft, this load is inversely related to the eccentricity of the coupling surface. The eccentricity is necessarily small in the prior patent and any increase in the eccentricity would result in an increase in the overall diameter and thus an unacceptable increase in the size of the differential. Secondly, the interface between the coupling and the output shaft is a line contact only which would cause unacceptably high Hertzian contact stresses and excessive and premature wear. This problem is solved in the present invention by the use of the slippers but this would not be possible in the prior construction since it would again result in an excessively large overall diameter. Thirdly, if the interface of the outer surface of the inner ends of the output shafts and the cage were to support the high loads generated by the small eccentricity necessary in the prior construction, serious problems would arise because no provision is made for the necessary abrasion resistance.

In one embodiment of the invention the coupling and the restraint member constitute respective bars which extend substantially perpendicular to one another. In this embodiment the coupling bar and the restraint bar constitute a cruciform shape with the coupling bar being rotatable about, and movable parallel to, the length of the restraint bar. In one construction, the coupling and restraint member are integral and thus constitute a single cruciform member, the ends of the restraint member being longitudinally slidably and rotatably coupled to the cage. In an alternative construction, the ends of the restraint member are fixedly coupled to the cage and its central portion is received rotatably and longitudinally slidably in a hole in the coupling. Alternatively, these two constructions might be combined so that the restraint bar is only rotatable with respect to the cage and the coupling bar is only slidable with respect to the restraint bar, for instance by providing cooperating splines or the like extending in the direction of the length of the restraint bar on a portion of the external surface of the restraint bar and the internal surface of the hole in the coupling bar.

When the differential of the embodiments described above is installed in a vehicle which is travelling in a straight line, the two output shafts rotate at the same speed and the cage, coupling, restraint member and output shafts all rotate together at the same speed, effectively as a solid body. However, if the vehicle should turn a corner, one output shaft is constrained to rotate at a slower speed and differentiation occurs, that is to say contra-rotational motion is transmitted through the coupling to the other output shaft whose speed thus increases by the same amount. The output shafts thus both rotate with respect to the coupling which reciprocates back and forth in a direction perpendicular to the axis of rotation of the half-shafts and cage and also oscillates in rotation, that is to say rotates back and forth about the axis of the restraint member which extends perpendicular to the axis of rotation of the half-shafts and cage.

In a further embodiment of the invention the coupling is not constituted by a simple bar but by a spur gear and a respective transmission member which is coupled to each output shaft to be rotatable with respect to it about an axis parallel to but offset from the said axis and carries rack teeth on its inner surface which extend in a direction perpendicular to the said axis and are in mesh with the teeth on the spur gear whereby rotation of the spur gear about an axis perpendicular to the said axis tends to cause movement of the two transmission members in opposite directions perpendicular to the said axis, the spur gear being carried by a restraint bar which constitutes the restraint member and extends perpendicular to the said axis and whose ends are coupled to the cage so as to be rotatable about and movable parallel to its length, carrier means being provided which prevent relative movement perpendicular to the said axis of the teeth on the spur gear and the rack teeth, whereby as differential rotation of the output shafts occurs the spur gear and restraint bar reciprocate in rotation about the length of the restraint bar and linearly in the direction of the length of the restraint bar. Although apparently very different, this embodiment in fact operates in a manner analogous to that of the first embodiment. When differential rotation of the output shafts occurs, the spur gear oscillates in rotation and when viewed in the direction of its length may be considered to constitute a rocking lever similar to the rocking lever coupling bar of the first embodiment. For this reason the spur gear need not have teeth over its entire periphery but need only have two opposed groups of teeth in mesh with respective racks. The bypassing of the differential components by a significant proportion of the applied propulsive load is achieved in this embodiment in precisely the same way as in the preceding embodiments and the same advantages are therefore also achieved.

Since the linear reciprocating motion of the coupling with respect to the cage is necessary for the contra-rotation of the output shafts when differentiation occurs, it is necessary that sliding motion of the spur teeth and rack teeth in a direction perpendicular to the axis of the half-shafts is prevented. This may be effected in various ways, but in one construction the spur gear is discontinuous along the length of the restraint bar and is divided into two portions by a peripheral shoulder, the rack teeth also being divided into two portions in mesh with respective portions of the spur gear, the inner ends of the two rack teeth portions being situated adjacent the shoulder whereby relative movement of the racks and the spur gear in a direction perpendicular to the said axis is prevented.

In those constructions in which the restraint bar reciprocates linearly with respect to the cage in a direction perpendicular to the axes of the output shafts, its ends may simply be slidably received in open holes in the cage and will thus project through these holes by a cyclically varying distance when differential rotation of the output shafts occurs.

Further features and details of the invention will be apparent from the following description of two specific embodiments which is given by way of example with reference to the accompanying diagrammatic drawings, in which: -
Figure 1 is a sectional view of a first embodiment of an automotive differential in accordance with the invention;
Figure 2 is a further sectional view of the differential of Figure 1 but at right angles to the view of Figure 1;
Figure 3 is a view similar to Figure 2 of a modified version of the first embodiment;
Figure 4 is a view similar to Figure 2 of a second embodiment but with one output shaft rotated through 90° with respect to the other output shaft; and
Figure 5 is a view of the differential of Figure 4 rotated through 90°.

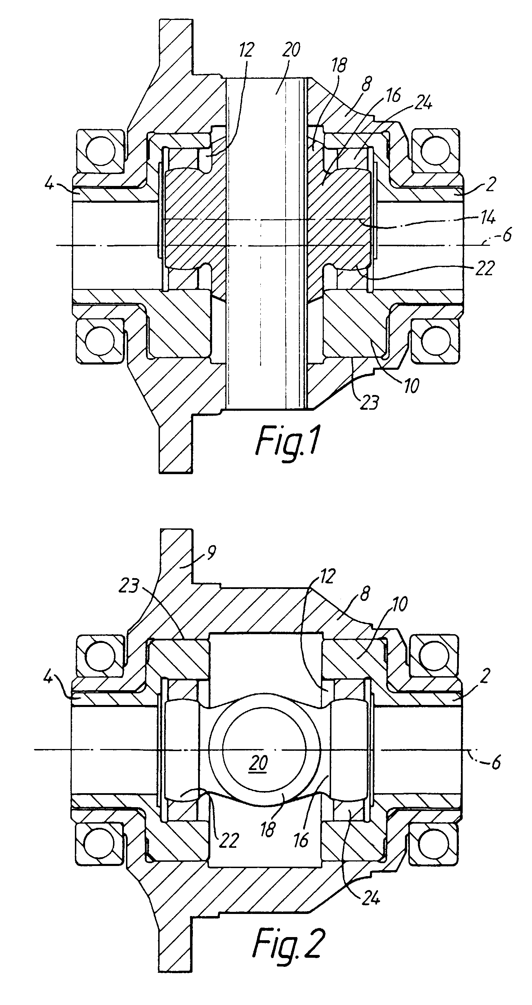

The differential of Figures 1 and 2 includes two output shafts 2 and 4, which are rotatable about a common axis 6 and pass through, and are rotatable with respect to, a cage 8 which is also rotatable about the axis 6. The cage has an end cover 9 which is the final drive flange through which rotational movement is transmitted to the cage. At their inner ends the output shafts have a thickened portion 10 in which a cylindrical hole or recess 12 is formed, the axis 14 of which is parallel to but offset from the axis 6. Received in the holes 12 are the ends of a coupling bar 16 at whose centre there is a tubular portion 18 defining a hole whose axis is perpendicular to the axis 6. Slidably and rotatably received in this hole is a restraint bar 20.

The ends of the restraint bar 20 are fixedly secured to opposed sides of the cage 8. At its ends the coupling bar 16 carries part-spherical segments 22 whose surface engages the complementary internal surface of a respective sleeve 24 which is slidably received in the associated eccentric hole 12.

The external surface of each thickened portion 10 is of circular shape and is spaced by a clearance from the opposed circular portion of the internal surface of the cage, which is less than the clearance between the output shafts 2 at the point at which they pass through the cage, so that contact may not occur at that point. A sliding interface 23 is thus defined between each thickened portion and the cage.

In use, when a vehicle, to which the differential is fitted, travels in a straight line, the cage is rotated about the axis 6 and thus rotational movement is transmitted through the restraint and coupling bars 20,16 to the output shafts 2,4 and all the illustrated components rotate at the same speed and do not move either linearly or in rotation with respect to one another. A substantial proportion of the propulsive torque of the engine is transmitted from the cage 8 to the restraint bar 20 and thence to the coupling bar 16. This load displaces the output shafts by a small distance perpendicular to the axis 6 and thus presses one side of the outer surface of the thickened portions 10 into contact with the corresponding portion of the inner surface of the cage 8 with a force which increases with the propulsive torque. This contact effectively constitutes a force-locking connection between the cage and the output shafts and a significant proportion of the propulsive torque is thus transmitted directly from the cage to the output shafts and bypasses the restraint and coupling bars which can thus be of lighter construction than usual and are subject to a reduced tendency to failure. If the vehicle should turn a corner, one of the output shafts rotates at a slower speed and thus contra-rotates with respect to the other output shaft. This movement causes linear movement of the coupling bar 16 along the length of the restraint bar 20 and rotational movement about it and this movement is transmitted to the other output shaft as a corresponding increase in rotational speed by the reciprocating rocking motion of the coupling bar. The coupling bar thus reciprocates linearly in the plane of Figure 1 and oscillates in rotation in the plane of Figure 2 at a rate determined by the differential speed of the two output shafts. The oscillatory movement of the coupling bar results in the ends 14 and the sleeves 24 reciprocating back and forth in the eccentric holes 12. The force transmitted from the coupling bar to the thickened portions 10 is transmitted over the relatively large area of the external surface of the sleeves 24 and thus no excessively large contact loads are produced whereby wear of the cooperating surfaces of the sleeves 24 and thickened portions 10 is minimised. The contra-rotation of the output shafts results in the areas of contact between the thickened portions 10 and the internal surface of the cage contra-rotating also. This generates a frictional torque where both the normal force and the coefficient of friction are load dependent, which means that the torque bias ratio of the differential increases with increasing load.

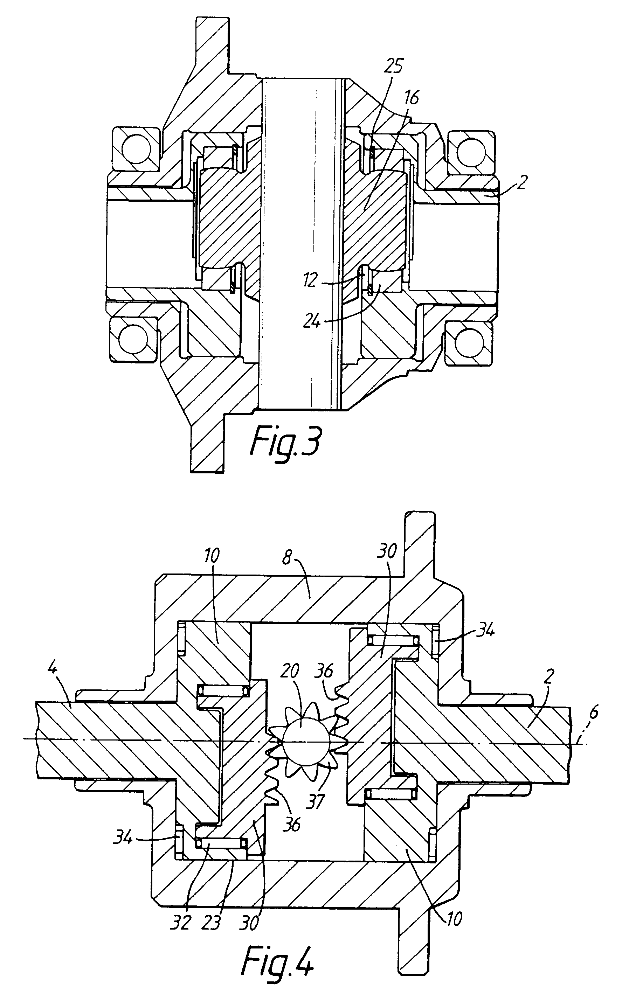

When the output shafts of the construction described rotate at different speeds the coupling bar necessarily reciprocates in the plane of the paper, as seen in Figures 1 and 2. In the construction illustrated in those Figures, this reciprocation is accommodated by the sleeves 24 reciprocating in the holes 12. However, in the modified construction shown in Figure 3, such reciprocation is restrained by annular rings 25 whereby the sleeves 24 are free to slide only in rotation in the holes 12 and not longitudinally. This construction is for use in cases where the output shafts 2 are to be connected to shafts which are connected to respective constant velocity joints which are inherently adapted to accommodate such longitudinal movement. In this case the reciprocation of the coupling is simply absorbed by the constant velocity joints and no provision for it need be made in the differential itself.

In the embodiments of Figures 1 to 3 the cooperating sliding surfaces on the inner ends of the output shafts and the cage are smooth, that is to say circular cylindrical surfaces. However, this is not essential and these surfaces may be complementarily profiled in the axial direction, e.g. provided with complementary V groove or multiple V groove profiles. This will increase the proportion of the total torque which passes through the bypass path.

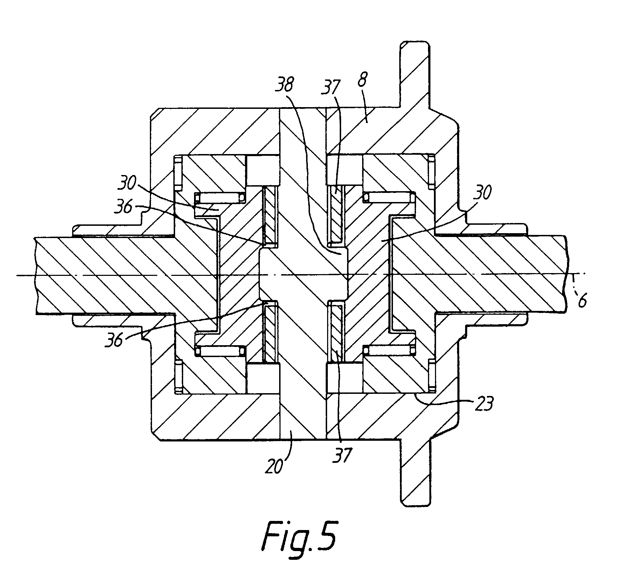

The embodiment of Figures 4 and 5 differs from the preceding embodiment in that the eccentric circular holes at the inner ends of the output shafts 2, 4, which in this case are half-shafts, receive respective circular transmission elements 30 which are readily rotatable about their axis by virtue of needle roller bearings 32 and needle thrust bearings 34. On their inner surfaces the transmission elements 30 carry respective racks 36, which, as seen in Figure 4, each extend in a direction perpendicular to the axis 6 and are split into two portions in this direction with a gap between the two portions. The coupling comprises a spur wheel 37 which is carried by a restraint bar 20 and whose teeth engage those of both racks and are split into two portions in a similar manner, the two portions being separated by a shoulder or portion of enlarged diameter 38 on the restraint bar. The ends of the restraint bar 20 are slidably and rotatably received in opposing holes in the cage 8. The outer surface of the enlarged portions 10 again engages the opposed areas of the internal surface of the cage 8 at a sliding interface 23, which operates precisely as described above.

In use, if one half-shaft should be retarded relative to the other it rotates relative to the cage and this rotational movement is transmitted by the associated transmission element, which rotates about its axis with respect to the half-shaft, to the spur wheel 36 which is also caused to move in the direction of the length of the restraint bar by the engagement of the inner ends of one or other portion of rack teeth with the shoulder 38.

Movement of the spur wheel 36 parallel to the length of the restraint bar 20 relative to the rack of the other transmission member is prevented by engagement of the ends of one or other portion of the rack teeth with the shoulder 38 and thus the rotational and longitudinal motion of the spur wheel is transmitted as contra-rotational motion to the other half-shaft whose speed is therefore increased by a corresponding amount. The restraint member 20 thus reciprocates linearly in the direction of its length and in rotation about its length at a rate which is determined by the differential speed of the half-shafts.

Obviously, numerous modifications and variations of the present invention are possible in the light of the above teachings. It is therefore to be understood that within the scope of the appended claims, the invention may be practiced otherwise than as specifically described herein.

## Claims

1. A differential drive mechanism comprising a cage (8), which is rotatable about an axis (6) and represents the input, two coaxial output shafts (2,4) which are received in respective holes in the cage and are rotatable with respect to the cage (8) about the said axis (6) and have inner ends (10) within the cage, a coupling (16) which is connected eccentrically to the two output shafts (2,4) to transmit relative contra-rotational movement between them by connections (12,22, 24) which permit relative rotation of the coupling (16) and the output shafts (2,4) about an axis (14) substantially parallel to the said axis (6) and a restraint member (20) which is coupled to the cage (8) and to the coupling (16) such that the coupling (16) is rotatable with respect to the cage (8) about an axis substantially perpendicular to the said axis (6) and capable of reciprocating movement in a direction perpendicular to the said axis (6) but prevented from movement in a direction parallel to the said axis (6), the eccentric connection of the coupling (16) and the output shafts (2,4) including a respective eccentric hole (12) formed in the inner end (10) of each output shaft (2,4) in which the associated end of the coupling (16) is received, the ends of the coupling (16) having a part-spherical engagement surface, a sleeve (24) which affords a complementary part-spherical internal surface being received in each eccentric hole (12) and each engagement surface being in engagement with a respective complementary internal surface, characterised in that the inner end (10) of each output shaft (2,4) has an external surface which constitutes a sliding surface in sliding engagement with an opposed portion of the inner surface of the cage (8), which constitutes a sliding surface, and that the clearance between the said sliding surfaces is less than that between the output shaft (2,4) and the edges of the holes in the cage in which they are received, whereby as the cage (8) rotates about the said axis (6) the sliding surface on the inner end (10) of each output shaft (2,4) is pressed by the coupling (16) into contact with the opposed sliding surface on the cage (8) so that a proportion of the input torque transmitted to the cage (8) is transmitted directly to the output shafts (2,4) through the cooperating sliding surfaces.

2. A mechanism as claimed in claim 1 characterised in that each sleeve (24) is slidable within the associated eccentric hole (12) in rotation and parallel to the said axis (6).

3. A mechanism as claimed in claim 1 characterised in that each sleeve (24) is slidable within the associated eccentric hole (12) in rotation but is restrained so as to be fixed parallel to the said axis (6).

4. A mechanism as claimed in any one of the preceding claims characterised in that the cooperating sliding surfaces are subjected to a treatment consisting of phosphation and/or nitridation and/or heat treatment to increase their abrasion resistance.

5. A mechanism as claimed in any one of the preceding claims characterised in that the coupling (16) and the restraint member (20) constitute respective bars which extend substantially perpendicular to one another.

6. A mechanism as claimed in claim 5 characterised in that the coupling (16) and the restraint member (20) are integral and thus constitute a single cruciform member, the ends of the restraint member (20) being longitudinally slidably and rotatably coupled to the cage (8).

7. A mechanism as claimed in claim 5 characterised in that the ends of the restraint member (20) are fixedly coupled to the cage (8), that the coupling (16) defines a hole and that a central portion of the restraint member (20) is received rotatably and longitudinally slidably in the hole in the coupling (16).

8. A mechanism as claimed in claim 1 characterised in that the coupling constitutes a spur gear (37) carrying teeth and two transmission members (30) which are coupled to respective output shafts (2,4) to be rotatable with respect to them about an axis parallel to but offset from the said axis (6) and carry rack teeth (36) on their inner surfaces directed towards one another which extend in a direction perpendicular to the said axis (6) and are in mesh with the teeth on the spur gear (37), whereby rotation of the spur gear (37) about an axis perpendicular to the said axis (6) tends to cause movement of the two transmission members (30) in opposite directions perpendicular to the said axis (6), that the spur gear (37) is carried by a restraint bar (20) which constitutes the restraint member and extends perpendicular to the said axis (6), that the ends of the restraint member (20) are coupled to the cage (8) so as to be rotatable about and movable parallel to its length and that carrier means (38) is provided which prevent relative movement perpendicular to the said axis (6) of the teeth on the spur gear (37) and the rack teeth (36), whereby as differential rotation of the output shafts (2,4) occurs the spur gear (37) and the restraint bar (20) reciprocate in rotation about the length of the restraint bar (20) and linearly in the direction of the length of the restraint bar (20).

9. A mechanism as claimed in claim 8 characterised in that the spur gear (37) is discontinuous along the length of the restraint bar (20) and is divided into two portions by a peripheral shoulder (38), that the rack teeth (37) are also divided into two portions in mesh with respective portions of the spur gear and that the inner ends of the two rack teeth portions are situated adjacent the shoulder (38) whereby relative movement of the rack teeth (30) and the spur gear (37) in a direction perpendicular to the said axis (6) is prevented.

## Patentansprüche

1. Differentialer Antriebsmechanismus, umfassend ein Gehäuse (8), welches um eine Achse (6) drehbar angeordnet ist und den Eingang bildet, zwei koaxiale Ausgangswellen (2, 4), welche in entsprechenden Bohrungen im Gehäuse aufgenommen und relativ zum Gehäuse (8) um die Achse (6) drehbar sind, und innerhalb des Gehäuses innere Enden (10) aufweisen, eine Kupplung (16), welche exzentrisch mit den beiden Ausgangswellen (2, 4) verbunden ist, um eine relative Gegendrehbewegung zwischen diesen über Verbindungen (12, 22, 24) zu übertragen, welche eine relative Drehung der Kupplung (16) und der Ausgangswellen (2, 4) um eine Achse (14), die im wesentlichen parallel zur Achse (6) verläuft ermöglichen, sowie ein Halteteil (20), welches mit dem Gehäuse (8) und der Kupplung (16) so gekoppelt ist, daß die Kupplung (16) relativ zum Gehäuse (8) um eine Achse drehbar ist, die im wesentlichen senkrecht zur Achse (6) verläuft, und eine hin- und hergehende Bewegung in einer Richtung senkrecht zur Achse (6) zuläßt, jedoch eine Bewegung in einer Richtung parallel zur Achse (6) verhindert, wobei die exzentrische Verbindung der Kupplung (16) und der Ausgangswellen (2, 4) je eine entsprechende Exzenterbohrung (12) aufweist, die in das innere Ende (10) jeder Ausgangswelle (2, 4) eingebracht ist, in welcher das angeschlossene Ende der Kupplung (16) aufgenommen ist, und die Enden der Kupplung eine kugelabschnittsförmige Eingriffsfläche aufweisen, und eine Buchse (24), welche eine komplementäre kugelabschnittsförmige Innenfläche aufweist, in jeder Exzenterbohrung (12) aufgenommen ist, und jede Eingriffsfläche sich in Eingriff mit einer entsprechenden Innenfläche befindet, **dadurch gekennzeichnet**, daß das innere Ende (10) jeder Ausgangswelle (2, 4) eine Außenfläche aufweist, welche eine Gleitfläche für ein gleitendes Zusammenwirken mit einem gegenüberliegendem Bereich der Innenfläche des Gehäuses (8), die ebenfalls eine Gleitfläche darstellt, bildet, und daß der Zwischenraum zwischen den Gleitflächen geringer ist als der zwischen den Ausgangswellen (2, 4) und den Kanten der Bohrungen im Gehäuse, in welchen sie aufgenommen sind, wodurch, wenn das Gehäuse (8) sich um die Achse (6) dreht, die Gleitfläche am inneren Ende (10) jeder Ausgangswelle (2, 4) durch die Kupplung (16) in Kontakt mit der gegenüberliegenden Gleitfläche am Gehäuse (8) gedrückt wird, so daß ein Teil des auf das Gehäuse (8) übertragenen Eingangsdrehmomentes über die zusammenwirkenden Gleitflächen direkt auf die Ausgangswellen (2, 4) übertragen wird.

2. Mechanismus nach Anspruch 1, **dadurch gekennzeichnet**, daß jede Buchse (24) in der zugehörigen Exzenterbohrung (12) sowohl in Drehbewegung als auch parallel zur Achse (6) gleitend angeordnet ist.

3. Mechanismus nach Anspruch 1, **dadurch gekennzeichnet**, daß jede Buchse (24) in der zugehörigen Exzenterbohrung (12) in Drehbewegung gleiten kann, jedoch in der Weise begrenzt wird, daß sie parallel zur Achse (6) unbeweglich ist.

4. Mechanismus nach einem oder mehreren der vorhergehenden Ansprüche, **dadurch gekennzeichnet**, daß die zusammenwirkenden Gleitflächen einer Behandlung ausgesetzt werden, welche ein Phosphatieren und/oder Nitrieren und/oder eine Wärmebehandlung umfaßt, um deren Abriebfestigkeit zu erhöhen.

5. Mechanismus nach einem oder mehreren der vorhergehenden Ansprüche, **dadurch gekennzeichnet**, daß die Kupplung (16) und das Halteteil (20) entsprechende Begrenzungen bilden, welche im wesentlichen senkrecht zueinander angeordnet sind,

6. Mechanismus nach Anspruch 5, **dadurch gekennzeichnet**, daß die Kupplung (16) und das Halteteil (20) integral geformt sind und somit ein einziges kreuzförmiges Teil bilden, wobei die Enden des Halteteiles (20) längsverschieblich und drehbar mit dem Gehäuse (8) verkoppelt sind.

7. Mechanismus nach Anspruch 5, **dadurch gekennzeichnet**, daß die Enden des Halteteiles (20) fest mit dem Gehäuse (8) verbunden sind, daß die Kupplung (16) eine Bohrung aufweist, und daß ein mittlerer Bereich des Halteteiles (20) drehbar und längsverschieblich in der Bohrung der Kupplung (16) aufgenommen ist.

8. Mechanismus nach Anspruch 1, **dadurch gekennzeichnet**, daß die Kupplung aus einem Stirnzahnrad (37) mit Zähnen gebildet ist, sowie aus zwei Übertragungsgliedern (30), welche mit entsprechenden Ausgangswellen (2, 4) gekoppelt sind, so daß diese relativ zu den Übertragungsgliedern um eine Achse, die parallel jedoch versetzt zur Achse (6) verläuft, drehbar sind, und Zahnstangen (36) an ihren Innenflächen aufweisen, die aufeinander zu gerichtet und in einer Richtung angeordnet sind, die senkrecht zur Achse (6) verläuft, und sich in Eingriff mit den Zähnen des Stirnzahnrades (37) befinden, wodurch die Drehung des Stirnzahnrades (37) um eine Achse, die senkrecht zur Achse (6) verläuft, eine Bewegung der beiden Übertragungsglieder (30) in entgegengesetzte Richtungen, senkrecht zur Achse (6), bewirkt, und das Stirnzahnrad (37) durch eine Haltestange (20) gehalten wird, welche das Halteteil darstellt, und welche senkrecht zur Achse (6) angeordnet ist, wobei die Enden des Halteteiles (20) mit dem Gehäuse (8) so gekoppelt sind, daß sie um ihre Längsachse drehbar und parallel zu dieser beweglich sind, und daß eine Lagereinrichtung (38) vorgesehen ist, welche eine relative Bewegung senkrecht zur Achse (6) der Zähne des Stirnzahnrades (37) und der Zahnstangen (36) verhindert, wodurch, wenn unterschiedliche Drehungen der Ausgangswellen (2, 4) auftreten, sich das Stirnzahnrad (37) und die Haltestange (20) in Drehbewegung um die Haltestange (20) und linear in Längsrichtung der Haltestange (20) hin- und herbewegen.

9. Mechanismus nach Anspruch 8, **dadurch gekennzeichnet**, daß das Stirnzahnrad (37) längs der Haltestange (20) unterbrochen und durch eine periphere Schulter (38) in zwei Teile geteilt ist, daß die Zahnstangen (37) im Eingriff mit den entsprechenden Teilen des Stirnzahnrades ebenfalls in zwei Teile geteilt sind, und daß die inneren Enden der beiden Zahnstangenteile neben der Schulter (38) angeordnet sind, wodurch eine relative Bewegung der Zahnstangen (30) und des Stirnzahnrades (37) in einer senkrecht zur Achse (6) verlaufenden Richtung verhindert wird.

## Revendications

1. Un mécanisme d'entraînement différentiel comprenant une cage (8) qui est montée à rotation autour d'un axe (6) et constitue l'organe d'entrée, deux arbres de sortie coaxiaux (2, 4) qui sont reçus dans les orifices respectifs formés dans la cage et peuvent tourner par rapport à la cage (8) autour dudit axe (6) et comportent des extrémités intérieures (10) situées l'intérieur de la cage, un organe d'accouplement (16) qui est assemblé excentriquement aux deux arbres de sortie (2,4) pour transmettre entre eux un mouvement contrarotatif relatif par des moyens de connexion (12, 22, 24) qui permettent une rotation relative de l'organe d'accouplement (16) et des arbres de sortie (2, 4) autour d'un axe (14) sensiblement parallèle audit axe (6) et un organe de retenue (20) qui est accouplé à la cage (8) et à l'organe d'accouplement (16) de telle sorte que l'organe d'accouplement (16) peut tourner par rapport à la cage (8) autour d'un axe sensiblement perpendiculaire audit axe (6) et est capable d'effectuer un mouvement de va-et-vient dans une direction perpendiculaire audit axe (6) mais est empêché de se déplacer dans une direction parallèle audit axe (6), l'assemblage excentrique de l'organe d'accouplement (16) et des arbres de sortie (2, 4) comportant un orifice excentrique respectif (12) formé dans l'extrémité intérieure (10) de chaque arbre de sortie (2, 4), dans lequel l'extrémité associée de l'organe d'accouplement (16) est reçue, les extrémités de l'organe d'accouplement (16) comportant une surface d'appui partiellement sphérique, un manchon (24) qui présente une surface interne partiellement sphérique complémentaire étant logé dans chaque orifice excentrique (12) et chaque surface d'appui étant en appui contre une surface interne complémentaire respective, caractérisé en ce que l'extrémité intérieure (10) de chaque arbre de sortie (2, 4) comporte une surface externe qui constitue une surface de glissement en appui glissant contre une surface en vis-à-vis de la surface intérieure de la cage (8) laquelle constitue une surface de glissement, et en ce que le jeu libre entre lesdites surfaces de glissement est inférieur à celui qui existe entre les arbres de sortie (2, 4) et les bords des orifices formés dans la cage dans lesquels il sont reçus, de sorte que lorsque la cage (8) tourne autour dudit axe (6), la surface de glissement formée sur l'extrémité intérieure de chaque arbre de sortie (2, 4) est repoussée par l'organe d'accouplement (16) en contact avec la surface de glissement en vis-à-vis formée sur la cage (8) de sorte qu'une partie du couple d'entrée transmis à la cage (8) est directement transmise aux arbres de sortie (2, 4) par l'intermédiaire des surfaces de glissement coopérantes.

2. Un mécanisme tel que revendiqué dans la revendication 1, caractérisé en ce que chaque manchon (24) est monté coulissant en rotation et parallèlement audit axe (6) dans l'orifice excentrique associé (12).

3. Un mécanisme tel que revendiqué dans la revendication 1, caractérisé en ce que chaque manchon (24) est monté coulissant en rotation dans l'orifice excentrique associé (12) mais est retenu de façon à être fixe parallèlement audit axe (6).

4. Un mécanisme tel que revendiqué dans l'une quelconque des revendications précédentes, caractérisé en ce que les surfaces glissantes coopérantes sont soumises à un traitement consistant en une phosphatation et/ou une nitruration et/ou un traitement thermique pour accroître leur résistance à l'abrasion.

5. Un mécanisme tel que revendiqué dans l'une quelconque des revendications précédentes, caractérisé en ce que l'organe d'accouplement (16) et l'organe de retenue (20) constituent des barre respectives qui s'étendent sensiblement perpendiculairement l'une à l'autre.

6. Un mécanisme tel que revendiqué dans la revendication 5, caractérisé en ce que l'organe d'accouplement (16) et l'organe de retenue (20) sont formés en une seule pièce et constituent ainsi un unique organe cruciforme, les extrémités de l'organe de retenue (20) étant accouplées à la cage (8) de façon à pouvoir se déplacer longitudinalement et en rotation.

7. Un mécanisme tel que revendiqué dans la revendication 5, caractérisé en ce que les extrémités de l'organe de retenue (20) sont rigidement assemblées à la cage (8), en ce que l'organe d'accouplement (16) délimite un orifice et en ce que la partie centrale de l'organe de retenue (20) est reçue à rotation et à coulissement longitudinal dans l'orifice formé dans l'organe d'accouplement (16).

8. Un mécanisme tel que revendiqué dans la revendication 1, caractérisé en ce que l'organe d'accouplement est constitué par un pignon droit (37) portant des dents et par deux organes de transmission (30) qui sont accouplés aux arbres de sortie respectifs (2, 4) de façon à pouvoir tourner par rapport à ces derniers autour d'un axe parallèle audit axe (6) mais excentré par rapport à lui et portent des dents de crémaillère (36) sur leurs surfaces intérieures orientées l'une vers l'autre qui s'étendent dans une direction perpendiculaire audit axe (6) et engrènent avec les dents formées sur le pignon droit (37), de telle sorte que la rotation du pignon droit (37) autour d'un axe perpendiculaire audit axe (6) tend à provoquer le déplacement des deux organes de transmission (30) dans des directions opposées perpendiculaires audit axe (6), en ce que le pignon droit (37) est porté par une barre de retenue (20) qui constitue l'organe de retenue et s'étend perpendiculairement audit axe (6), en ce que les extrémités de l'organe de retenue (20) sont accouplées à la cage (8) de façon à pouvoir se déplacer en rotation autour de sa longueur et parallèlement à sa longueur et en ce que sont prévus des moyens supports (38) qui empêchent un mouvement relatif perpendiculairement audit axe (6) des dents formées sur le pignon droit (37) et des dents de crémaillère (36), de sorte que lorsqu'une rotation différentielle des arbres de sortie (2, 4) se produit, le pignon droit (37) et la barre de retenue (20) se déplacent en va-et-vient en rotation autour de la longueur de la barre de retenue (20) et linéairement dans le sens de la longueur de barre de retenue (20).

9. Un mécanisme tel que revendiqué dans la revendication 8, caractérisé en ce que le pignon droit (37) est discontinu dans le sens de la longueur de la barre de retenue (20) et est divisé en deux parties par un épaulement périphérique (38), en ce que les dents de crémaillère (37) sont également divisées en deux parties qui engrènent avec les partie respectives du pignon droit et en ce que les extrémités intérieures des deux parties de dents de crémaillère sont situées adjacentes à l'épaulement (38) de sorte qu'un mouvement relatif des dents de crémaillère (30) et du pignon droit (37) dans une direction perpendiculaire audit axe (6) est empêché.
